Europäisches Patentamt

European Patent Office

Office européen des brevets

(11) Veröffentlichungsnummer : **0 171 627**
**B1**

(12) **EUROPÄISCHE PATENTSCHRIFT**

(45) Veröffentlichungstag der Patentschrift :
09.09.87

(51) Int. Cl.⁴ : **B 60 T 17/08, F 16 D 65/38**

(21) Anmeldenummer : **85108848.4**

(22) Anmeldetag : **15.07.85**

(54) **Willkürlich betätigbarer Drehantrieb für Notlöse und Rückstelleinrichtungen von Federspeicherbremszylindern und Gestängestellern von Fahrzeugbremsanlagen.**

(30) Priorität : **23.07.84 DE 3427113**

(43) Veröffentlichungstag der Anmeldung :
**19.02.86 Patentblatt 86/08**

(45) Bekanntmachung des Hinweises auf die Patenterteilung : **09.09.87 Patentblatt 87/37**

(84) Benannte Vertragsstaaten :
**CH DE FR GB IT LI SE**

(56) Entgegenhaltungen :
**EP-A- 0 031 057**
**EP-A- 0 034 803**
**EP-A- 0 084 295**
**DE-A- 2 309 757**
**DE-A- 2 714 472**
**DE-A- 3 132 580**
**DE-B- 2 646 158**
**FR-A- 2 242 602**
**GB-A- 2 040 373**
**GB-A- 2 082 254**

(73) Patentinhaber : **KNORR-BREMSE AG**
**Moosacher Strasse 80 Postfach 401060**
**D-8000 München 40 (DE)**

(72) Erfinder : **Bartlechner, Manfred**
**Am Katzenstein 1**
**D-8031 Wessling (DE)**
Erfinder : **Kerscher, Albert**
**Frühlingstrasse 39**
**D-8057 Eching (DE)**

## Beschreibung

Die Erfindung betrifft einen willkürlich betätigbaren, einseitigen Drehantrieb für Notlöse- und Rückstelleinrichtungen von Federspeicherbremszylindern und Gestängestellern von Fahrzeugbremsanlagen, mit einem an gut zugänglicher Fahrzeugstelle angeordnete Handbetätigungsglied, einem an der zu betätigenden Einrichtung angeordneten Umsetzorgan zum Umsetzen der Betätigungsbewegung und einem das Handbetätigungsglied mit dem Umsetzorgan verbindenden Gestänge.

Für mechanische Notlöseeinrichtungen von Federspeicherbremszylindern im Fahrzeugbremsanlagen ist es vielfach bekannt, ein von Hand gegebenenfalls über ein aufzusteckendes Werkzeug anzutreibendes Teil vorzusehen, bei dessen Drehen auch ohne Druckmittelbeaufschlagung des Federspeicherbremszylinders dieser durch Lösen einer Kupplung rasch oder auch durch Verschrauben eines Teiles allmählich aus seiner Brems- in seine Lösestellung verstellt wird. Hierzu sei insbesondere auf die DE-B-24 50 652 verwiesen, doch auch die DE-A-1 555 116, DE-B-2 254 090, US-A-3 704 653 sowie die EU-A-0 016 566 zeigen hierfür typische Federspeicherbremszylinder entsprechend dem Oberbegriff des Anspruchs 1.

Ebenso sind für Gestängesteller von Fahrzeugbremsanlagen, welche als gesondertes Bauteil in ein Bremsgestänge eingeordnet oder in einen Bremszylinder integriert sein können, Drehantriebe für Rückstelleinrichtung bekannt, welche dem Rückstellen der Gestängesteller beim Austausch verschlissener gegen neue Bremsbeläge bzw. Bremsklötze dienen. Typische, derartige Rückstelleinrichtungen sind beispielsweise aus den DE-C-851 821, DE-C-1 153 411 und DE-C-22 56 431 sowie dem DE-U-1 942 566 bekannt. Aus der DE-C-924 274 ist es weiterhin bekannt, den Drehantrieb für eine derartige Rückstelleinrichtung über ein Gestänge mit an gut zugänglichen Fahrzeugstellen angeordneten Handbetätigungsgliedern zu versehen. Bei diesem bekannten Drehantrieb ist jedoch bei jeder einzelnen Handbetätigung nur ein geringer Drehwinkel erreichbar, so daß mitunter ein oftmaliges, zeitraubendes Betätigen erforderlich ist, um einen erforderlichen, größeren Drehwinkel zu erreichen.

Der Erfindung liegt die Aufgabe zugrunde, einen Drehantrieb der eingangs genannten Art zu schaffen, welcher bei einmaliger Handbetätigung das Erzielen beachtlicher Drehwinkel ermöglicht, welcher besonders einfach und platzsparend ist und gegebenenfalls in Art eines Anbauteiles an Federspeicherbremszylindern und Gestängestellern anbringbar ist, wobei das Handbetätigungsglied weitgehend unabhängig von der Einbausituation des Federespeicherbremszylinders bzw. Gestängestellers in besonders einfacher Weise ohne nennenswerten, zusätzlichen Bau- und Montageaufwand an beliebigen, besonders gut zugänglichen Fahrzeugstellen angeordnet werden kann und welche insgesamt nur einen geringen Bau- und Montageaufwand erfordert, wobei sich zudem infolge der Anmwendbarkeit des Drehantriebes sowohl bei Notlösewie bei Rückstelleinrichtungen unterschiedlicher Bauart durch große Stückzahlmengen besondere Rationalisierungsmöglichkeiten bieten.

Diese Aufgabe wird nach der Erfindung für einen Drehantrieb der eingangs genannten Art dadurch gelöst, daß das Handbetätigungsglied aus einer Ruhestellung im weentlich geradlinig wegziehbar ausgebildet ist, daß Gestänge als die Wegziehbewegung zum Umsetzorgan übertragender Seil- oder Bowdenzug ausgebildet ist und daß das Umsetzorgan eine drehbar gelagerte Seiltrommel zum Aufwickeln des bzw. der endseitig mit ihr verbundenen Seilzuges bzw. Seele des Bowdenzuges aufweist, welche in Aufwickelrichtung von einer Aufwickelfeder drehbelastet ist und welche über eine in Abwicklungs-Drehrichtung schließende und in Aufwicklungs-Drehrichtung öffnende Kupplung, gegebenenfalls Freilaufkupplung, mit dem anzutreibenden Teil der zu betätigenden Einrichtung kuppelbar ist.

Nach einer Weiterbildung der Erfindung ist es dabei besonders vorteilhaft, wenn die Kupplung in ihrem Öffnungszustand eine Drehmoment-Übertragung vom anzutreibenden Teil zur Seiltrommel in beiden Drehrichtungen ausschließt. Hierdurch wird sichergestellt, daß im Betrieb evtl. auftretende Drehbewegungen des anzutreibenden Teiles, welche durch innere Funktionsteile des Federspeicherbremszylinders oder Gestängestellers bewirkt sein können, bei in Endstellung befindlichem und damit in einer Drehrichtung blockiertem Drehantrieb keine ungewollten Funktionen auslösen können.

Die weiteren Unteransprüche 3-6 geben nach weiterer Weiterbildungsmöglichkeiten der Erfindung vorteilhafte Ausgestaltungsmöglichkeiten für einen nach den vorstehend erwähnten Merkmalen ausgebildeten Drehantrieb an.

In der Zeichnung ist ein Ausführungsbeispiel für einen nach der Erfindung ausgebildeten Drehantrieb dargestellt und zwar zeigt

Figur 1   eine Aufsicht auf einen teilweise aufgeschnittenen Drehantrieb,

Figur 2   einen Schnitt entlang der Linie A-B in Figur 1,

Figur 3   einen Schnitt entlang der Linie C-D in Figur 1 und

Figur 4   eine   Einzelheit   in   vergrößertem Maßstab.

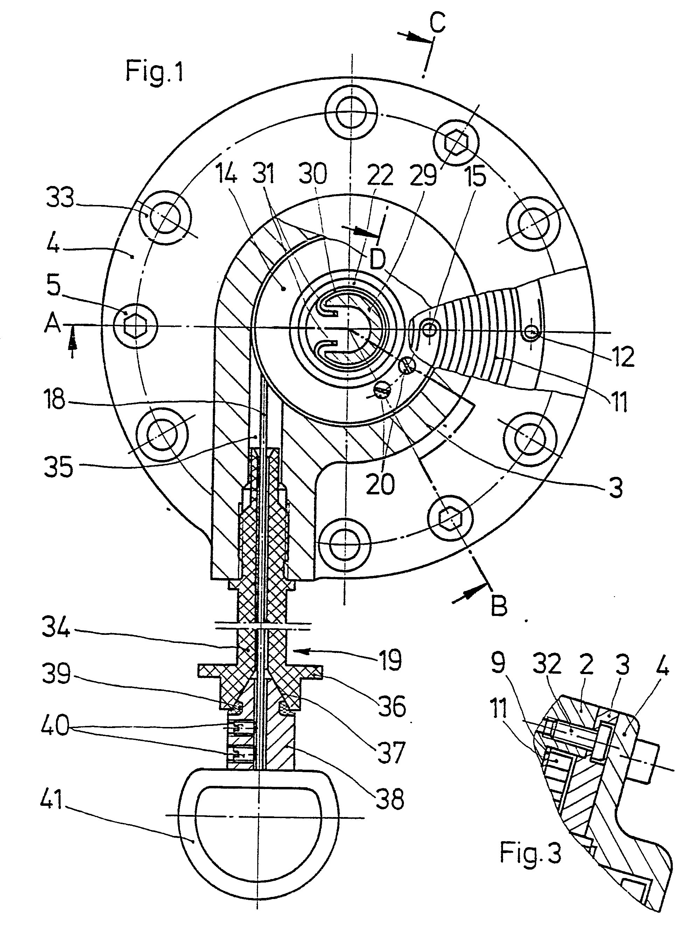

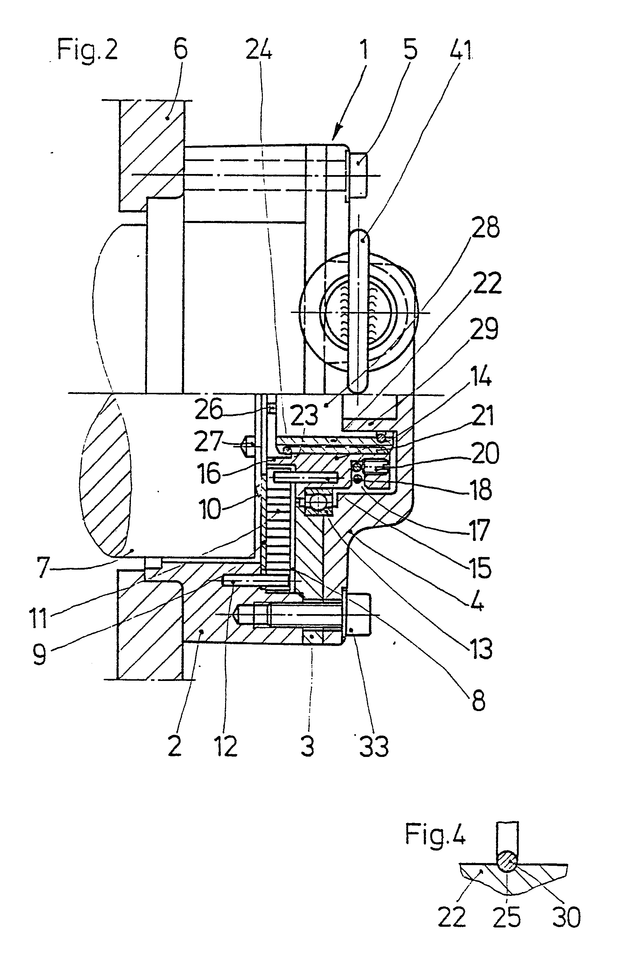

Der Antrieb 1 weist gemäß Fig. 1 und 2 ein in ein Mantelteil 2, einen Zwischendeckel 3 und einen Deckel 4 aufgegliedertes Gehäuse 2, 3, 4 auf, welches mittels Schraubbolzen 5 undrehbar mit dem Gehäuse 6 eines in weiteren nicht dargestellten Federspeicherbremszylinders oder Gestängestellers verbunden ist; im Gehäuse 7 befindet sich das durch den Drehantrieb 1 anzutreibende Teil 7. Bei Anwendung des Drehantriebes 1 an einem Federspeicherbremszylinder nach der bereits erwähnten DE-AS-24 50 652 entspricht das Gehäuse 6 dem dortigen Bremszylindergehäuse und das Teil 7 der dortigen Bedienungsmuffe.

In einer Aussparung 8 innerhalb des Mantelteiles 2, welche einerseits durch ein ringscheibenartiges Führungsteil 9 gegen die Stirnfläche 10 des Teiles 7 und andererseits vom Zwischendeckel 3 des Gehäuses 2, 3, 4 begrenzt ist, befindet sich eine Spiralfeder 11, deren äußeres Ende mittels eines Stiftes 12 am Mantelteil 2 verankert ist ; der Stift 12 dient dabei zugleich der Halterung des Führungsteiles 9. In einer zum Deckel 4 hin offenen Ausnehmung des Zwischendeckels 3 befindet sich ein Lager 13, welches der drehbaren, aber axial unverschieblichen Lagerung einer Seiltrommel 14 dient. Mit einem den Zwischendeckel 3 in Richtung zum Deckel 4 überragenden, kleinen Abschnitt greift das Lager 13 in eine Zentriernut des Deckels 4 ein und bewirkt hierdurch dessen Zentrierung. Das innere Ende der Spiralfeder 11 ist mittels eines Stiftes 15 an der Seiltrommel 14 verankert, welche mit einem zylindrischen Ansatz 16 in die zentrische Ausnehmung der Spiralfeder 11 eingreift. Andererseits weist die Seiltrommel 14 eine nach radial außen offene Ringnut 17 auf, in welcher ein Seil 18, welches im Ausführungsbeispiel die Seele eines Bowdenzuges 19 bildet, aufgewickelt ist. Das Ende des Seiles 18 ist mittels Madenschrauben 20 fest mit der Seiltrommel 14 verklemmt.

In die zentrische Ausnehmung der Seiltrommel 14 ist mittels eines nichtselbsthemmenden Gewindes 21 ein hülsenartiges Kupplungsteil 22 eingeschraubt, welches in Richtung zum Teil 7 eine radial innere Axialschulter 23 der Seiltrommel 14 überragt. Ein nahe des dem Teil 7 zugewandten Endes in das Kupplungsteil 22 eingelassener Sicherungsring 24 vermag an der Axialschulter 23 zur Anlage zu gelangen und bildet zusammen mit letzterer einen Anschlag 23, 24, welcher die Relativverschiebung des Kupplungsteiles 22 zur Seiltrommel 14 in Entfernungsrichtung vom Teil 7 begrenzt. Nahe des anderen Endes ist das Kupplungsteil 22 an seinen Innenumfang mit einer im Querschnitt gerundeten Innenringnut 25 versehen, welche aus Fig. 4 besonders deutlich ersichtlich ist. An ihrer dem Teil 7 benachbarten Stirnfläche trägt das Kupplungsteil 22 einen oder über ihren Umfang gleichmäßig verteilt mehrere Axialvorsprünge 26, welche bei Axialverschiebung des Kupplungsteiles 22 in entsprechend angeordnete Axialbohrungen 27 einzurasten vermögen und welche somit zusammen mit letzteren eine axial verzahnte Kupplung 26, 27 bilden. In den vom Kupplungsteil 22 umschlossenen Raum 28 greift ein im Querschnitt etwa U-artiger Gehäuseansatz 29 des Deckels 4 ein. Im Raum zwischen dem Kupplungsteil 22 und dem Gehäuseansatz 29 befindet sich eine Schenkelfeder 30, welche den Gehäuseansatz 29 lose umfaßt und deren Enden 31 um die Schenkelenden des Gehäuseansatzes 29 herum etwa nach radial innen abgebogen sind, so daß diese Enden 31 die Schenkelenden des Gehäuseansatzes 29 lose umgreifen. Der Außenumfang der Schenkelfeder 30 ruht mit Reibschluß in der Innenringnut 25, wie es aus Fig. 4 ersichtlich ist. Die Schenkelfeder 30 ist damit undrehbar, aber axialverschieblich am Gehäuseansatz 29 und axial unverschieblich, aber gegen Reibwiderstand drehbar am Kupplungsteil 22 gehalten, so daß das Kupplungsteil 22 am Gehäuseansatz 29 axial verschieblich und gegen Reibwiderstand drehbar gehalten ist.

Wie aus Fig. 3 ersichtlich, ist der Zwischendeckel 3 mittels Schrauben 32 am Mantelteil 2 gehalten, der Deckel 4 ist mittels Schrauben 33, welche das Zwischenteil 3 durchsetzen, mit dem Mantelteil 2 verschraubt. (Fig. 2).

Der Mantel 34 des Bowdenzuges 19 ist einerseits in einer tangential zur Seiltrommel 14 verlaufenden Bohrung 35 des Deckels 4 gehalten ; das Seil 18 verläuft durch diese Bohrung 35 zur Seiltrommel 14. Der Bowdenzug 19 erstreckt sich von den vorstehend beschriebenen, insgesamt als Umsetzorgan zu bezeichnenden Teil des Drehantriebes 1 zu einer gut zugänglichen Stelle des Fahrzeuges, an welcher Stelle das andere Ende des Mantels 34 mit einem Kopfteil 36 am nicht dargestellten Fahrzeug befestigt ist. Das Kopfteil 36 endet mit einer konischen Öffnung 37, in welche ein Konusansatz 38 über einen Dichtring 39 abgedichtet einzugreifen vermag. Das die Seele des Bowdenzuges 19 darstellende Seil 18 endet im Konusansatz 38 und ist dort mittels Madenschrauben 40 durch Verklemmen gehalten. Der Konusansatz 38 ist mit einem Griffring 41 verbunden, so daß durch etwa annähernd geradliniges Wegziehen des Griffringes 41 vom Kopfteil 36 das Seil 18 von der Seiltrommel 14 unter entsprechender Drehung der letzteren abgewickelt werden kann ; die Seiltrommel 14 dreht sich hierbei in Spannrichtung der Spiralfeder 11.

Zur Montage des Drehantriebes ist bei abgenommenen Schrauben 33 der am Lager 13 geführte Deckel 4 derart zu drehen, daß das Seil 18 auf der vermittels der Spiralfeder 11 gehaltenen Seiltrommel 14 aufgewickelt wird, bis der Konusansatz 38 satt in der Öffnung 37 anliegt. Sodann ist zum Spannen der Spiralfeder 11 die Drehung noch etwas fortzusetzen, über das nun gespannte Seil 18 wird die Seiltrommel 14 mitgedreht und spannt dabei die Spiralfeder 11. Abschließend ist der Deckel 4 durch die Schrauben 33 fest mit den restlichen Teilen des Gehäuses 2, 3, 4 zu verbinden.

Wird zum Betätigen des Drehantriebes 1 am Griffring 41 gezogen, so wird durch Herausziehen des Seites 18 aus dem Gehäuse 2, 3, 4 die Seiltrommel 14 in Spannrichtung der Spiralfeder 11 gedreht, wie vorstehend bereits erwähnt wurde. Bei dieser Drehung der Seiltrommel 14 verschraubt sich über das Gewinde 21 das durch Reibschluß zur Schenkelfeder 30 drehbehinderte Kupplungsteil 22 gemäß Fig. 2 nach links, wobei die Axialvorsprünge 26 entweder sofort in die Axialbohrungen 27 einrasten oder vorerst auf die Stirnfläche 10 aufsetzen. Im letzteren Fall wird bei weiterer Drehung der Seiltrommel 14 das Kupplungsteil 22 mitgedreht, bis die Axialvorsprünge 26 mit den Axialbohrungen 27 fluchten und nunmehr in letztere einrasten. Die Kupplung 26, 27 wird in jedem Falle geschlossen. Da anschließend eine weitere Axialverschiebung des Kupplungsteiles 22 durch Anlage am Teil 7 ausgeschlossen ist, wird bei weiterer Drehung der Seiltrommel 14 über das Kupplungsteil 22 und die geschlossene Kupplung 26, 27 auch das Teil 7 mitgedreht. Die relativ geringe Reibung der Schenkelfeder 30 am Kupplungsteil 22 behindert diese Drehung in nur sehr geringem Maße ; diese Reibung kann so gering sein, da sie lediglich ein Verschrauben des Kupplungsteiles 22 zu Drehbeginn der Seiltrommel 14 sicherstellen muß.

Nach erfolgter Drehung des Teiles 7 wird der Griffring 41 bis zum Eingreifen des Konusansatzes 38 in die Öffnung 37 zurückgeführt, wobei die Spiralfeder 11 die Seiltrommel 14 in Aufwickelrichtung des Seiles 18 dreht. Infolge der am Kupplungsteil 22 wirksamen Drehhinderungen durch das Teil 7 und die Reibung an der Schenkelfeder 30 folgt dabei das Kupplungsteil 22 der Drehung nicht, sondern verschraubt sich in seine in Fig. 2 dargestellte Ausgangslage zurück, bis der Anschlag 23, 24 sich durch Anlegen des Sicherungsringes 24 an die Axialschulter 23 schließt. Während der weiteren Drehung der Seiltrommel 14 zum Aufwickeln des Seiles 18 wird das Kupplungsteil 22 unter Überwinden der Reibung zur Schenkelfeder 30 mitgedreht. Sollte die vorstehend geschilderte Betätigung trotz des großen, gegebenenfalls mehrere Umdrehungen erreichenden Drehwinkels für das Teil 7 nicht genügen, so können die vorstehend geschilderten Betätigungsvorgänge bis zum Erreichen des erforderlichen Drehwinkels bzw. der erforderlichen Umdrehungszahl des Teiles 7 wiederholt werden.

Zum Abschluß der Betätigung verspannt die Spiralfeder 11 über die Seiltrommel 14 und das Seil 18 den Konusansatz 38 in die Öffnung 38, wie es für den Ruhezustand beschrieben wurde. Der Dichtring 39 schließt in diesem Zustand ein Verschmutzen des Drehantriebes durch Eindringen von Fremdkörpern oder Feuchtigkeit in den Bowdenzug 19 und/oder die Bohrung 35 aus. Da im übrigen der Drehantrieb 1 vollständig geschlossen ist, ist er gut gegen Verschmutzen und innere Korrosion geschützt.

In Abänderung vom dargestellten Ausführungsbeispiel kann an die Stelle des Bowdenzuges 19 ein reiner, im Fahrzeug entsprechend zu verlegender Seilzug mit dem Seil 18 treten. Bei dieser Ausführung ist es zweckmäßig, das Seil 18 an der Eintrittsstelle in den Deckel 4 abzudichten. Weiterhin ist es bei entsprechenden Einbaubedingungen möglich, unter Entfall des Bowdenzuges 19 das Kopfteil 36 unmittelbar an der Außenmündung der Bohrung 35 zu haltern.

Falls der Drehantrieb 1 nur relativ geringe Drehmomente ausüben muß, können die Axialvorsprünge 26 und die Axialbohrung 27 entfallen, die Kupplung zwischen dem Kupplungsteil 22 und dem Teil 7 stellt dann eine durch Anlage der Stirnfläche des Kupplungsteiles 22 an der Stirnfläche 10 gebildete Reibungskupplung dar.

Bei den vorstehend beschriebenen Ausführungsbeispielen des Drehantriebes 1 ist wesentlich, daß im dargestellten Ruhezustand das Teil 7 vom Kupplungsteil 22 und damit den bewegbaren Teilen des Drehantriebes 1 vollständig entkuppelt ist. Sollten, durch Funktionsteile des Federspeicherbremszylinders bzw. Gestängestellers bedingt, am Teil 7 Drehbewegungen auftreten — solche Drehbewegungen können insbesondere durch Fahrerschütterungen angeregt werden —, so können diese Drehbewegungen zu keinerlei Verstellungen des Drehantriebes führen, insbesondere kann kein übermäßiges Spannen des Seiles 18 mit hieraus evtl. resultierenden, unerwünschten Rückwirkungen auf das Teil 7 erfolgen. In umgekehrter Drehrichtung des Teiles 7 kann auch kein Lockern des Seiles 35 und damit Unwirksamwerden des Dichtringes 39 auftreten. Sollte diese vollständige Abkupplung des Teiles 7 vom Drehantrieb in dessen Ruhestellung nicht erforderlich sein, so ist es in weiterer Abänderung der beschriebenen Ausführungsbeispiele möglich, die Seiltrommel 14 über eine Freilaufkupplung unmittelbar mit einem mit dem Teil 7 fest verbundenen Teil zu verbinden, das Gewinde 21, das Kupplungsteil 22, die Schenkelfeder 30 und der Gehäuseansatz 29 können dabei entfallen.

Der Drehantrieb 1 ist als eine an Federspeicherbremszylinder oder Gestängesteller jeweils unterschiedlicher Bauart leicht anbaubare Baueinheit ausgebildet, er ist nach geringer Anpassung auch zur nachträglichen Ausrüstung dieser Bremsgeräte geeignet. Diese vielfältigen Anwendungsmöglichkeiten eröffnen die Möglichkeit einer kostengünstigen Fertigung in größeren Stückzahlen

Bezugszeichenliste

| 1 | Drehantrieb |
|---|---|
| 2 | Mantelteil |
| 3 | Zwischendeckel |
| 4 | Deckel |
| 2,3,4 | Gehäuse |
| 5 | Schraubbolzen |
| 6 | Gehäuse |
| 7 | Teil |
| 8 | Aussparung |
| 9 | Führungsteil |
| 10 | Stirnfläche |
| 11 | Spiralfeder |
| 12 | Stift |
| 13 | Lager |
| 14 | Seiltrommel |
| 15 | Stift |
| 16 | Ansatz |
| 17 | Ringnut |
| 18 | Seil |
| 19 | Bowdenzug |
| 20 | Madenschraube |
| 21 | Gewinde |
| 22 | Kupplungsteil |
| 23 | Axialschulter |
| 24 | Sicherungsring |

23,24 Anschlag
25 Innenringnut
26 Axialvorsprung
27 Axialbohrung
26,27 Kupplung
28 Raum
29 Gehäuseansatz
30 Schenkelfeder
31 Enden
32 Schrauben
33 Schrauben
34 Mantel
35 Bohrung
36 Kopfteil
37 Öffnung
38 Konusansatz
39 Dichtring
40 Madenschraube
41 Griffring

**Patentansprüche**

1. Willkürlich betätigbarer, einseitiger Drehantrieb (1) für Notlöse- und Rückstelleinrichtungen von Federspeicherbremszylindern und Gestängestellern von Fahrzeugbremsanlagen, mit einem an gut zugänglicher Fahrzeugstelle angeordneten Handbetätigungsglied (41), einem an der zu betätigenden Einrichtung angeordeten Umsetzorgan zum Umsetzen der Betätigungsbewegung in eine Drehbewegung und einem das Handbetätigungsglied mit dem Umsetzorgan verbindenden Gestänge (18 ; 19), dadurch gekennzeichnet, daß das Handbetätigungsglied (41) aus einer Ruhestellung im wesentlichen geradlinig wegziehbar ausgebildet ist, daß das Gestänge als die Wegziehbewegung zum Umsetzorgan übertragender Seil- oder Bowdenzug (18 ; 19) ausgebildet ist, und daß das Umsetzorgan eine drehbar gelagerte Seiltrommel (14) zum Aufwickeln des bzw. der endseitig fest mit ihr verbundenen Seilzuges (18) bzw. Seele des Bowdenzuges (19) aufweist, welche in Aufwickelrichtung von einer Aufwickelfeder (11) drehbelastet ist und welche über eine in Abwicklungs-Drehrichtung schließende und in Aufwicklungs-Drehrichtung öffnende Kupplung (26, 27), gegebenenfalls Freilaufkupplung, mit dem anzutreibenden Teil (7) der zu betätigenden Einrichtung kuppelbar ist.

2. Drehantrieb nach Anspruch 1, dadurch gekennzeichnet, daß die Kupplung (26, 27) in ihrem Öffnungszustand eine Drehmomentübertragung vom anzutreibenden Teil (7) zur Seiltrommel (14) in beiden Drehrichtungen ausschließt.

3. Drehantrieb nach Anspruch 2, dadurch gekennzeichnet, daß die Seiltrommel (14) in einem mit der zu betätigenden Einrichtung fest verbunden, undrehbaren Gehäuse (2, 3, 4) drehbar und axial unverschieblich gelagert und von einer Spiralfeder (11) drehbelastet ist und daß die Seiltrommel (14) mittels eines nichtselbsthemmenden Gewindes (21) mit einem am Gehäuse (2, 3, 4) axial verschieblich und nur gegen einen Widerstand drehbar gelagerten Kupplungsteil (22) verschraubt ist, welches über eine bei Axialverschiebung durch Drehen der Seiltrommel (14) in Abwickelrichtung schließende, gegebenenfalls exial verzahnt ausgebildete Kupplung (26, 27) mit dem anzutreibenden Teil (7) kuppelbar ist.

4. Drehantrieb nach Anspruch 3, dadurch gekennzeichnet, daß das Kupplungsteil (22) hülsenartig ausgebildet und in eine zentrische Ausnehmung der Seiltrommel (14) eingeschraubt ist, daß ein im Querschnitt etwa U-artiger Gehäuseansatz (29) in den vom Kupplungsteil (22) umschlossenen Raum (28) eingreift und daß sich in dem Raum zwischen dem Kupplungsteil (22) und dem Gehäuseteil (29) eine letzteren umfassende, mit ihren etwa nach radial innen abgebogenen Schenkelenden (31) die Schenkelenden des Gehäuseansatzes (29) lose umgreifende Schenkelfeder (30) befindet, deren Außenumfang mit Reibschluß an der Innenwandung des Kupplungsteils (22) anliegt.

5. Drehantrieb nach Anspruch 4, dadurch gekennzeichnet, daß das Kupplungsteil (22) in axialer Verschieberichtung bei Drehen der Seiltrommel (14) in Aufwickelrichtung durch einen Anschlag (23, 24) gegen die Seiltrommel (14) abfangbar ist.

6. Drehanteil nach Anspruch 4 oder 5, dadurch gekennzeichnet, daß die Schenkelfeder (30) mit ihrem Außenumfang in eine Innenringnut (25) des Kupplungsteils (22) eingreift.

**Claims**

1. Optionally actuable one-side torque drive (1) for an emergency release and resetting device of a spring-operated brake cylinder and rod-regulating means for a vehicle braking system, having a manual actuating member (41) which is arranged at an easily accessible point of the vehicle, a conversion element arranged on the device to be actuated for converting the movement of actuation into a movement of rotation, and a linkage system (18 ; 19) connecting the manual actuating member with the conversion element, characterised in that the manual actuating member (41) is designed so that it can be pulled out of a rest position substantially in a straight line, that the linkage system comprises a sheathed or Bowden cable (18 ; 19) transmitting the pulling movement to the conversion element and that the conversion element has a rotatably mounted cable drum (14) for winding up the sheathed cable (18) or core of the Bowden cable (19) fixedly connected therewith at its end, which drum is torsionally loaded in the winding-up direction by a winding-up spring (11) and, by means of a coupling (26, 27) closing in the unwinding direction of rotation and opening in the winding-up direction of rotation, possibly a free-wheel coupling, may be coupled with the part (7), to be driven, of the device to be actuated.

2. Torque drive according to claim 1, characterised in that the coupling (26, 27) in its open state prevents torque transmission from the part (7) to be driven to the cable drum (14) in both directions of rotation.

3. Torque drive according to claim 2, characterised in that the cable drum (14) is mounted in a housing (2, 3, 4), which is fixedly connected with the device to be actuated and is not rotatable, so that the cable drum is rotatable and not axially displaceable and is torsionally loaded by a spiral spring (11), and that the cable drum (14) is screwed by means of a non-self-locking thread (21) to a coupling part (22) which is mounted on the housing (2, 3, 4) so that it is axially displaceable and rotatable only against a resistance and may be coupled with the part (7) to be driven by means of a coupling (26, 27) which closes in the event of axial displacement through rotation of the cable drum (14) in the unwinding direction and may be constructed with axial teeth.

4. Torque drive according to claim 3, characterised in that the coupling part (22) is constructed as a sleeve and is screwed into a central recess of the cable drum (14), that a housing projection (29), which is roughly U-shaped in cross section, extends into the space (28) enclosed by the coupling part (22), and that located in the space between the coupling part (22) and the housing part (29) there is a spring clip (30) which embraces the latter, loosely encompasses with its limb ends (31), which are bent roughly radially inwards, the limb ends of the housing extension (29) and the outer periphery of which lies, frictionally engaged, against the inner wall of the coupling part (22).

5. Torque drive according to claim 4, characterised in that the coupling part (22) may be retained in the axial displacement direction upon rotation of the cable drum (14) in the winding-up direction by a stop (23, 24) towards or against the cable drum (14).

6. Torque drive according to claim 4 or 5 characterised in that the spring clip (30) engages at its outer periphery with an inner ring groove (25) of the coupling part (22).

## Revendications

1. Mécanisme d'entraînement en rotation (1), unidirectionnel et susceptible d'être commandé intentionnellement pour des dispositifs de desserrage d'urgence et de rappel de cylindres à ressort accumulateur et de régleur automatique d'installations de freins pour véhicules, avec un organe de manœuvre (41) disposé en un emplacement du véhicule à bonne accessibilité, avec un organe de transformation servant à transformer le mouvement de manœuvre en un mouvement de rotation et avec une tringlerie reliant l'organe de manœuvre à l'organe de transformation, caractérisé par le fait que la tringlerie est réalisée sous la forme d'un câble de transmission ou câble de Bowden (18, 19) transmettant à l'organe de transformation le mouvement de traction, et que l'organe de transformation comporte un tambour à câble (14) pour enrouler le câble de transmission (18) ou l'âme du câble de Bowden (19), qui lui est reliée du côté de son extrémité, lequel tambour est chargé en rotation, dans le sens de l'enroulement, par un ressort d'enroulement (11) et est susceptible d'être accouplé avec la partie menée (7) du dispositif à commander, par l'intermédiaire d'un accouplement (26, 27) qui s'ouvre dans le sens de rotation qui correspond à l'enroulement, éventuellement par un accouplement à roue libre.

2. Mécanisme d'entraînement en rotation selon la revendication 1, caractérisé par le fait que l'accouplement (26, 27) exclut, dans son état ouvert, une transmission d'un couple de la partie menée (7) vers le tambour à câble (14), et cela dans les deux sens de rotation.

3. Mécanisme d'entraînement en rotation selon la revendication 2, caractérisé par le fait que le tambour à câble (14) est monté, de façon à pouvoir tourner sans pouvoir se déplacer axialement, dans un carter (2, 3, 4) qui n'est pas susceptible de tourner et qui est relié de façon fixe au dispositif à commander, lequel tambour est chargé en rotation par un ressort spiral (1), et que ledit tambour à câble (14) est vissé, à l'aide d'un filetage non autobloquant (21), avec un élément d'accouplement (22) qui est axialement mobile sur le carter (2, 3, 4) et qui est monté de façon à ne pouvoir tourner qu'à l'encontre d'une résistance, lequel élément d'accouplement (22) étant susceptible d'être accouplé à la partie menée (7), par l'intermédiaire d'un accouplement (26, 27) qui se ferme, lors d'un déplacement axial, par rotation du tambour à câble (14) dans le sens du déroulement, et qui est éventuellement réalisé avec des dents axiales.

4. Mécanisme d'entraînement en rotation selon la revendication 3, caractérisé par le fait que l'élément d'accouplement (22) est réalisé sous la forme d'une douille et est vissé dans une ouverture centrale du tambour à câble (14), qu'un appendice de carter (29), dont la section transversale se présente sensiblement sous la forme d'un U, pénètre dans l'espace (28) qui est délimité par l'élément d'accouplement (22), et que dans cet espace se situe, entre l'élément d'accouplement (22) et l'élément de carter (29), un ressort à branches (30) qui entoure librement, par les extrémités (31) coudées radialement vers l'intérieur des branches, les extrémités des branches de l'appendice du carter (29), la périphérie extérieure dudit ressort à branches portant, avec friction, contre la paroi intérieure de l'élément d'accouplement (22).

5. Mécanisme d'entraînement en rotation selon la revendication 4, caractérisé par le fait que l'élément d'accouplement (22) est susceptible d'être arrêté par rapport au tambour à câble (14), dans la direction du déplacement axial, par une butée (23, 24), lors de la rotation du tambour à câble (14) dans le sens de l'enroulement.

6. Mécanisme d'entraînement en rotation selon la revendication 4 ou 5, caractérisé par le fait que le ressort à branches (30) pénètre, par sa périphérie extérieure, dans une gorge annulaire intérieure (25) de l'élément d'accouplement (22).

Fig.1

Fig.3

Fig.2  6  24  1  5  41

28
22
29
14
21
20
18
17
15
4
13
8

26
23
27
16
10
7
11
9

2  12  3  33

Fig.4

22  25  30